Europäisches Patentamt

European Patent Office

Office européen des brevets

(19)

(11) Publication number: **0 026 246**
B1

## (12) EUROPEAN PATENT SPECIFICATION

(45) Date of publication of patent specification: **06.06.84**

(21) Application number: **79302018.1**

(22) Date of filing: **27.09.79**

(51) Int. Cl.³: **A 61 C 13/30,**
**A 61 C 13/22, A 61 F 1/03**

(54) Dowel post for anchoring a dental or medical prosthetic device.

(43) Date of publication of application:
**08.04.81 Bulletin 81/14**

(45) Publication of the grant of the patent:
**06.06.84 Bulletin 84/23**

(84) Designated Contracting States:
**BE CH DE GB IT**

(56) References cited:
**AT - B - 351 152**
**CH - A - 424 086**
**DE - A - 2 746 664**
**FR - A - 1 013 516**
**GB - A - 1 092 982**
**SE - C - 79 399**
**US - A - 2 705 837**
**US - A - 4 060 896**

(73) Proprietor: **Gross, Michael Joseph**
**14 Edith Road**
**London W14 (GB)**

(73) Proprietor: **Turner, Christopher Hugh**
**Cherry Tree Cottage, Hursley**
**Nr. Winchester, Hampshire (GB)**

(72) Inventor: **Gross, Michael Joseph**
**14, Edith Road**
**London W14 (GB)**

(74) Representative: **Lambert, Hugh Richmond et al,**
**D. YOUNG & CO. 10 Staple Inn**
**London, WC1V 7RD (GB)**

Courier Press, Leamington Spa, England.

## Description

This invention relates to dental and medical prosthetic devices, more particularly a dowel post for anchoring such prosthetic devices in position.

The invention will be particularly described with reference to dowel posts for anchoring dental crowns in dental restoration work, but it will be understood that the principles of the invention can be applied in other branches of dental or medical surgery or treatment wherein an anchor is required for securing a prosthetic device in position, for example, the securing in position of an artificial joint by means of a post anchored in a bone.

In dental restoration work, post crowns are generally mounted on a dowel post which is inserted and secured in a previously prepared hole in the root of the tooth to be crowned. Various designs and configurations have been proposed for the post itself and various methods have been used to secure the dowel post in position in the tooth root. One of the simplest techniques is to use a plain parallel-sided dowel post which is inserted into a previously prepared, parallel-sided blind hole in the root and secured therein by means of a cement. Tapered posts have also been proposed, as well as posts possessing both tapered and parallel sections, although, in general, such posts show less final retention strength than parallel-sided posts. Threaded posts have also been proposed, e.g. GB—A—1,092,982, but these have the disadvantage of requiring a thread to be tapped in the root of the tooth, a process which is difficult to carry out owing to the poor receptivity of dentine to the cutting of the thread therein. Not only that but the cutting of an accurately dimensioned thread is a time consuming and difficult task involving as it does the reaming of an initial parallel-sided hole and then the tapping of the thread therein. If the initial hole is oversized as it frequently is, then the thread subsequently cut therein is of an insufficient depth for adequate retention of the post. Threaded crowns also tend to work loose unless additionally secured by a cement, which brings further problems discussed more fully below.

Generally speaking, where a cement is used two major problems arise, namely: obtaining an adequate distribution and thickness of cement between the post and the sides of the prepared hole in the tooth root, and secondly, the avoidance of hydrostatic pressure which may build up ahead of the post as it is inserted, either by virture of an air bubble trapped ahead of the post, or by an accumulation of cement in the bottom of the hole due to wiping action of the post on the walls of the hole as the post is inserted. Generally, the cement is applied either by lining the hole with cement before insertion of the post, or by applying the cement to the post before insertion or a combination of the two. The former technique, whilst usually obtaining a complete or substantially complete distribution of the cement around the post is particularly prone to the build-up of hydrostatic pressure ahead of the post as it is pushed into the prepared hole, and this at best will limit the depth to which the post can be inserted, but may also result in the fracture of the tooth root. Application of the cement to the post prior to insertion substantially avoids the problem of hydrostatic pressure due to the trapping of cement ahead of the post during insertion, but almost invariably the act of inserting the post leads to the wiping off of a substantial proportion of the cement from the post, with the result that an incomplete and uneven cement distribution is obtained, which in turn, results in low retention strength. Lining of the hole is therefore the preferred technique, but at the risk of hydrostatic pressure build-up in the tooth root. To relieve this pressure build-up, and also air pressure which may likewise build-up due to the tight fit between the post and the hole, it has been proposed to provide a channel or groove in the surface of the post and extending longitudinally thereof to provide a passageway for venting excess cement and/or air pressure from in front of the post as it is inserted into the blind hole. This however, still does not solve the problem of obtaining uniform cement distribution and preventing wiping-off of the cement during insertion.

In the case of threaded posts, similar problems arise in the use of cement to lock the post in position. Although in theory the retention strength of threaded posts is provided by the interengaging threads, cement is frequently needed to give additional retention of a threaded post in an oversize hole, and in any case to lock the post against unscrewing. As in the case of parallel sided posts application of the cement to the post before insertion leads to the wiping off of the cement during insertion, with consequent inadequate distribution and failure to provide locking or additional retention strength, especially in slightly oversize holes, whilst lining the threaded hole with cement will almost inevitably result in substantially increased hydrostatic pressure in the tooth root with the consequent high risk of fracture.

Two other configurations for dental posts have been proposed in SE—C—79399 and FR—A—1,013,516. In SE—C—79399 a stepped post is proposed, i.e. having two axially spaced cylindrical sections of different diameter, which permit the post to be inserted into the naturally tapering root canal of a tooth and to be secured therein by an adhesive. To improve the adhesion, the surface of the post is provided with a spiral-shaped groove which extends at least along the length of the larger of the two cylindrical sections. Such an arrangement is disadvantageous at least in that the spacing of the cylindrical sections from the tapering walls of the root channel necessarily varies along the length of each section, leading to varying thicknesses and possible uneven distribution of the adhesive between the post and the inner surface of the root channel in the tooth. Nor does this proposal in any way deal with or solve the problem of pressure build-up and the wiping off of adhesive during the insertion of a parallel-sided post into a parallel sided hole.

In FR—A—1,013,516 a dental post is proposed consisting of a metal wire twisted upon itself at its mid-point to form a knot, which serves as the head portion for subsequent mounting of the crown thereon, and with the two ends of the wire twisted together to form a spirally wound shaft. This proposal does not specifically consider the problems outlined above, nor does it provide a very satisfactory solution to the problem of post retention since clearly rotational forces on the crown may tend to cause the shaft to untwist, with consequent loosening of the post in the tooth root.

In accordance with the present invention, we have developed a new post configuration, which improves the distribution of cement between the post and the hole, reduces pressure build-up ahead of the post during insertion, and generally obtains retention strengths substantially higher than those obtained with conventional parallel-sided or tapered posts, whether with the longitudinal venting groove or without.

In accordance with this invention, this is achieved by forming the shaft of the dowel post, i.e. the part which is to be received in the blind hole, with at least three contiguous concave flutes formed in the surface thereof and helically wound thereabout at a pitch angle of 70° or less to the axis of the post thereby to give the shaft a substantially uniform polygonal cross-section along its length, and an oblique section having a scalloped outline. Optimum retention is obtained at pitch angles in the range 20°—60°, with the preferred angle being about 45°. The flutes may extend only partway along the shaft portion of the dowel post, but preferably along substantially the entire length thereof. Preferably four or five contiguous flutes are provided to give the shaft a square or pentagonal cross-section.

The invention is further described with reference to the accompanying drawings, in which:

Fig. 1 is an enlarged view of a dowel post in accordance with the invention for use in securing a dental crown;

Fig. 2 is a section through the post of Fig. 1, taken on the lines III—III;

Figs. 3—5 are block diagram showing the reduction of hydrostatic pressures and the increase in retention strength obtained using posts according to the invention in dental crowns.

Referring to the drawings, the dowel post of this invention for securing dental crowns comprises a head 1 upon which the crown can be built-up or secured in a conventional manner and a shaft 2 by means of which the post can be located in a previously prepared parallel-sided blind hole in the root of the tooth to be crowned.

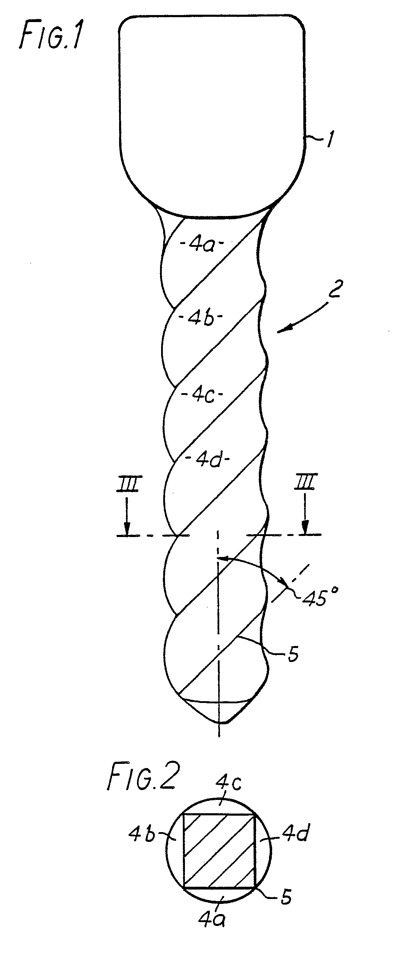

Formed in the surface of the shaft are four shallow concave flutes 4a, 4b, 4c, 4d forming four intertwined helices extending the length of the shaft 2 at an angle of 45° to the axis of the shaft. As will be seen from Fig. 2 the four helical flutes give the shaft a polygonal (square) cross-section. Also as will be seen from Fig. 2 the peaks 5 of the helical ribs formed between adjacent flutes are rounded.

The dowel post of the present invention will, of course, be manufactured from a biologically inert material, usually a metal or metal alloy, and preferably platinised gold alloy or a chrome/cobalt alloy, as are customarily used in dental and medical prostheses. Manufacture of the dowel post with the fluted shaft will generally be by investment casting, or by a drawing through a polygonal die and subsequently or simultaneously twisting the drawn polygonal wire and swaging the head thereon. Other methods of suitably shaping the dowel post of the invention will be apparent to those skilled in the art.

In mounting the dowel post of this invention in a tooth root, the tooth root is provided in known manner with a parallel-sided blind hole to the required depth. The hole is then lined with the luting cement, which alternatively or additionally can be applied to the fluted shaft 2 of the dowel post. The shaft of the dowel post is then inserted and pressed home, possibly with a slight twisting action. Preferably, the hole diameter will correspond substantially to the maximum diameter of the shaft, i.e. the distance from the peak of the ridge formed between adjacent flutes on one side to the peak of a corresponding ridge on the opposite side of the shaft, although it is a feature of the invention that the fluted dowel posts of this invention are well retained even in oversize holes.

In the case of dowel posts for dental crowns, the dowel posts will generally have diameters ranging from 1 to 2 mm and a length of about 15 mm although longer or shorter posts may be used in certain circumstances.

Once in position, the crown, or other prosthetic device, can be mounted on the head of the dowel post in conventional manner, e.g. by cementing.

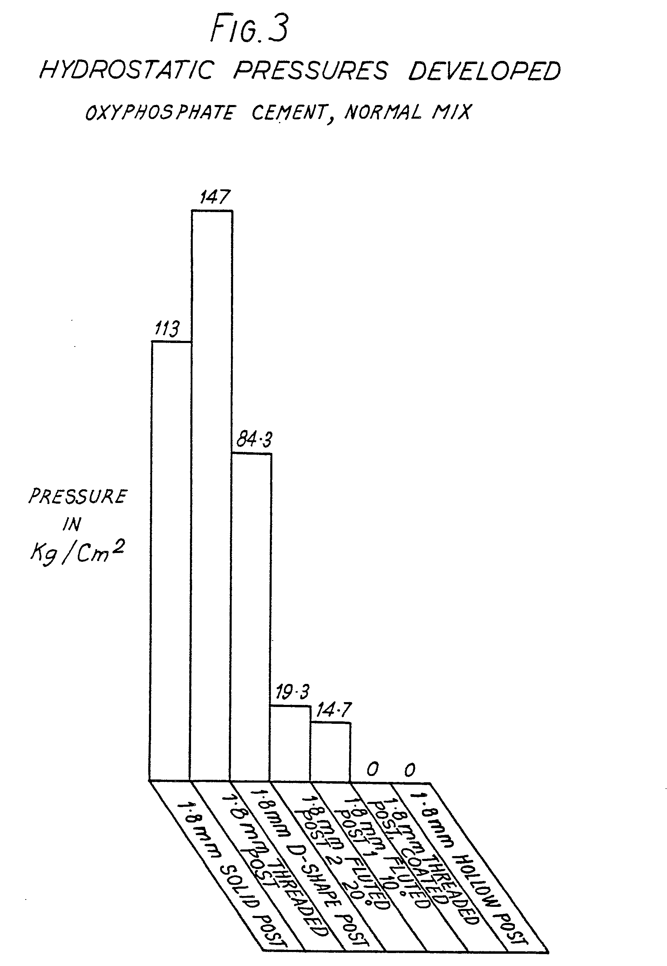

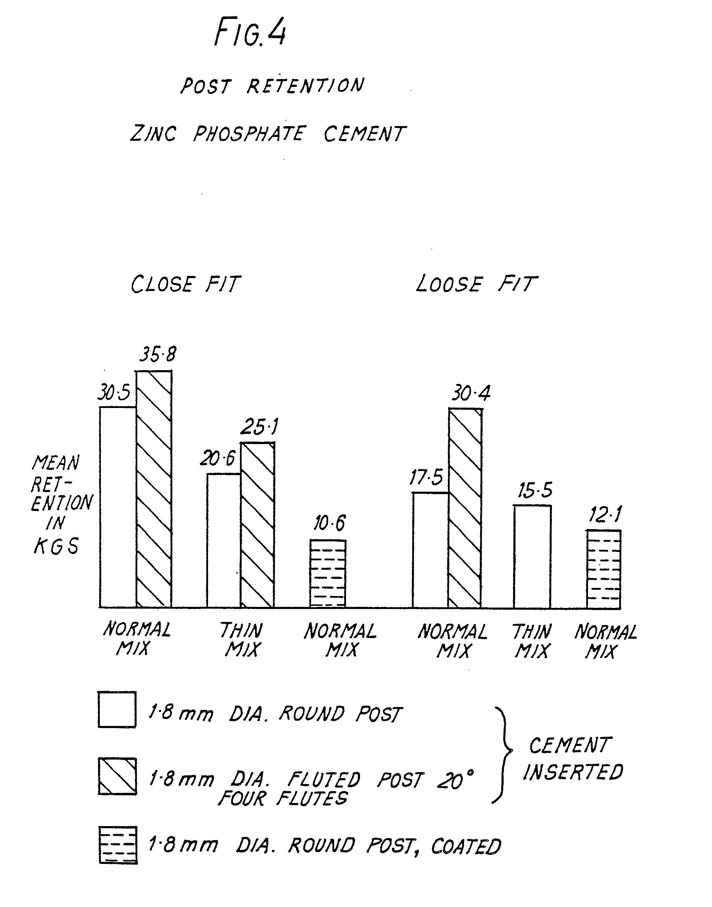

The reduction of hydrostatic pressure and increased retention of dowel posts according to the invention are illustrated by the accompanying block diagrams, Figs. 3 and 4, illustrating respectively the measured hydrostatic pressure developed inside the root of a tooth during insertion of various types of dowel post, and the retention strengths obtained using fluted posts in accordance with this invention as compared with plain parallel-sided posts. In general, tapered and grooved posts may be expected to achieve a reduction in hydrostatic pressure, although with grooved posts it has been shown that the reduction of hydrostatic pressure is only of the order of 20%, compared with 90% reduction achieved using fluted posts according to the invention, unless the groove is of relatively large dimensions in which case the retention strength is significantly reduced; but in any case, it is recognized that, in the case of grooved and tapered posts, the reduction in hydrostatic pressure is only achieved at the expense of some reduction in retention strength.

Figure 3 shows the substantial reduction in hydrostatic pressure obtained using fluted posts according to this invention when pressed into a previously prepared, parallel-sided blind hole in an acrylic block simulating the root of a tooth, to which a pressure gauge has been fitted, the holes being lined before insertion of the post with a normal oxyphoshate dental cement mix, as compared with a solid round section post and a post having a solid D-section, i.e. with a flat formed on one side to provide a pressure relief channel along one side thereof. The fluted posts used has a shaft length of 15 mm, a diameter of 1.8 mm and were formed with four helical flutes at a pitch and of 10° (post 1) and 20° (post 2) to the longitudinal axis. The posts used for comparison were of similar dimensions. Also for comparison is shown the hydrostatic pressure developed on inserting a threaded post into a tapped hole lined with the same cement, although such a method is not to be recommended in practice because of the high pressure generated, and the high risk of fracture. In practice, in using a threaded post the cement is applied to the post prior to insertion, in which case the hydrostatic pressure is generally negligible.

Figure 4 shows the increased retention strengths obtained using 1.8 mm diameter fluted posts in accordance with this invention inserted into both a close fit blind hole in an extracted tooth root and in a slightly oversize hole, using a standard zinc phoshate dental cement, as compared with values obtained using a solid round-section 1.8 mm diameter dowel post, both with the cement applied as a lining to the hole and applied to the post itself before insertion. The fluted posts had four helical flutes wound about the shaft at a pitch angle of 20°.

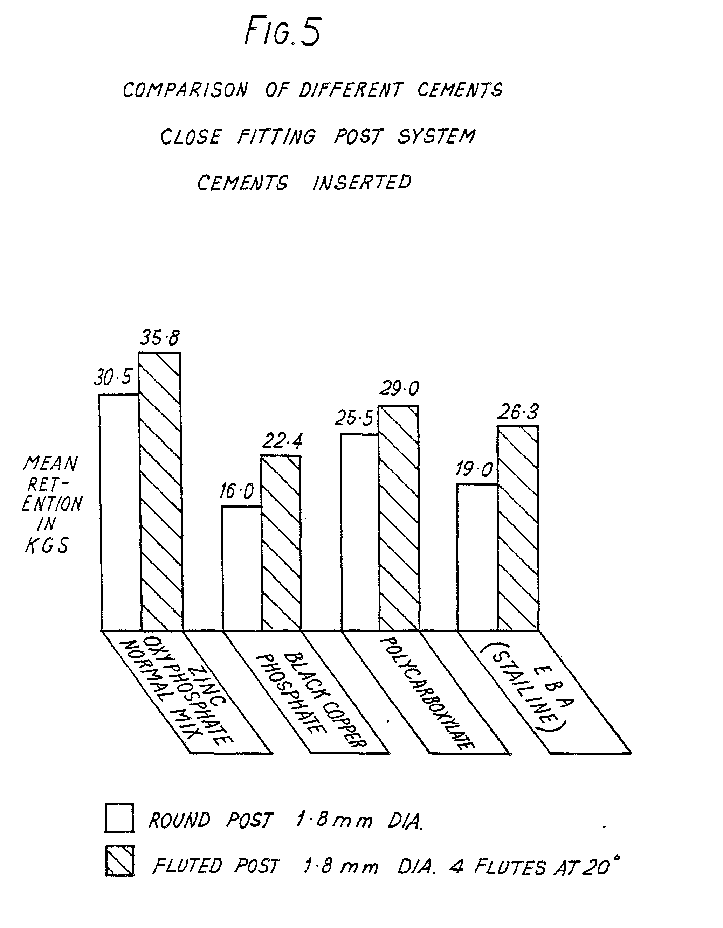

Figure 5 shows the effect of different types of cement using both fluted dowel posts in accordance with this invention and as described above in connection with Fig. 4 and round section posts inserted into a previously prepared blind hole lined with the cement in question. In all cases a significant increase in retention strength is demonstrated in respect of fluted posts in accordance with this invention.

In a subsequent series of tests 1 mm diameter and 1.6 mm diameter fluted platinised gold posts in accordance with this invention, having four helical flutes at a pitch angle of 45°, were inserted as a close fit into prepared blind holes in extracted tooth roots using a normal mix zinc phosphate dental cement applied as a lining to the hole, and tested for retention strength in an Instron (Registered Trade Mark) tester. The retention strengths obtained with the 1 mm posts were in the range 36—38 kg, whilst the 1.6 mm posts gave retention strengths in the range 45—46 kg. As will be seen these values are well above the generally recognised minimum retention strength requirement of 20—22 kg.

## Claims

1. A dowel post for anchoring a dental or medical prosthetic device, comprising a head (1) on which said device may be formed or mounted, and a shaft (2) extending therefrom for insertion into a previously prepared parallel-sided blind hole, and to be secured therein by a cement, the shaft (2) having a substantially constant cross-section along its length and providing a plurality of grooves (4a, 4b, 4c, 4d) helically intertwined about the axis of said shaft and co-extending substantially along the length thereof at a pitch angle of 70° or less to the axis of the shaft, characterised in that said shaft (2) is of a solid cross-section and in that said grooves (4a, 4b, 4c, 4d) are provided by at least three concave flutes formed in the surface of the shaft (2) said flutes being contiguous around the circumference of the shaft and providing the shaft with a substantially uniform polygonal cross-section along its length.

2. A dowel post according to claim 1, wherein said flutes are at a pitch angle of about 45° to the axis of the shaft.

3. A dowel post according to claim 2 having four helical flutes equispaced around the shaft and coextending along the length of the shaft.

4. A dental crown comprising a dowel post as claimed in any one of claims 1—3 and a crown member mounted on the head thereof.

5. A medical prosthetic device in the form of an artificial joint comprising a dowel post as claimed in any one of claims 1—3 and an artificial joint member formed or mounted on the head thereof.

## Revendications

1. Cheville pour l'ancrage de prothèses dentaires ou médicales, comportant une tête (1) destinée à porter la prothèse y formée ou montée, et une tige (2) prolongeant cette tête et destinée à être introduite dans un trou borgne pratiqué au préalable et à y être fixée à l'aide d'un ciment, tige (2) ayant une section transversale pratiquement constante sur toute sa longueur et accusant une pluralité de gorges hélicoïdales (4a, 4b, 4c, 4d) mutuellement enroulées autour de l'axe de la cheville et s'étendant ensemble sur toute la longueur de la cheville sous un angle de pente de 70° ou moins par rapport à l'axe de cette dernière, caractérisée en ce que ladite tige (2) a une section transversale pleine et lesdites gorges (4a, 4b, 4c, 4d) sont des cannelures, qui sont contiguës tout autour de la tige, à laquelle elles confèrent une section transversale de forme polygonale pratiquement constante sur toue sa longueur.

2. Cheville selon la revendication 1, caractérisée en ce que lesdites cannulures hélicoïdales ont un angle de vis d'environ 45° par rapport à l'axe de la tige de la cheville.

3. Cheville selon la revendication 2, caractérisée en ce que sa tige présente quatre cannelures équidistantes, réparties autour d'elle et s'étendant ensemble sur toute sa longueur.

4. Couronne dentaire, caractérisée en ce qu'elle se compose d'une cheville de fixation selon chacune des revendications précédentes 1 à 3 et d'une couronne proprement dite montée sur la tête de la cheville.

5. Prothèse médicale sous forme d'une articulation artificielle, caractérisée en ce qu'elle se compose d'une cheville de fixation selon chacune des revendications précédentes 1 à 3 et d'une articulation artificielle proprement dite, formée ou montée sur la tête de la cheville.

**Patentansprüche**

1. Dübelstift für die Verankerung einer Zahnprothese oder medizinischen Prothese mit einem Kopf (1), auf dem diese Prothese gebildet oder befestigt werden kann, und einem Schaft (2), der sich von dort aus erstreckt, um in ein vorher hergestelltes Sackloch mit parallelen Seiten eingeführt und darin mit einem Zement befestigt zu werden, wobei der Schaft (2) entlang seiner Länge einen im wesentlichen konstanten Querschnitt besitzt und mehrere Nuten (4a, 4b, 4c, 4d) bildet, die schraubenförmig um die Achse dieses Schaftes ineinander verschlungen sind und sich gemeinsam im wesentlichen entlang seiner Länge in einem Steigungswinkel von 70° oder weniger zu der Achse des Schaftes erstrecken, dadurch gekennzeichnet, daß der Schaft (2) einen massiven Querschnitt besitzt und daß die Nuten (4a, 4b, 4c, 4d) von wenigstens drei konkaven Hohlkehlen, die in der Oberfläche des Schaftes (2) ausgebildet sind, gebildet werden, wobei die Hohlkehlen um den Umfang des Schaftes herum aneinandergrenzen und den Schaft entlang seiner Länge mit einem im wesentlichen gleichmäßigen mehreckigen Querschnitt versehen.

2. Dübelstift nach Anspruch 1, bei dem die Hohlkehlen einen Steigungswinkel von etwa 45° zu der Achse des Schaftes haben.

3. Dübelstift nach Anspruch 2 mit vier schraubenförmigen Hohlkehlen, die in gleichen Abstand um den Schaft herum angeordnet sind und sich gemeinsam entlang der Länge des Schaftes erstrecken.

4. Zahnkrone mit einem Dübelstift gemäß einem der Ansprüche 1 bis 3 und einem auf dessen Kopf befestigten Kronenteil.

5. Medizinische Prothese in der Form eines künstlichen gelenkes mit einem Dübelstift gemäß einem der Ansprüche 1 bis 3 und einem auf dessen Kopf gebildeten oder befestigten künstlichen Gelenkteil.

FIG.1

-4a-

2

-4b-

-4c-

-4d-

III    III

45°

5

FIG.2

4c

4b    4d

5

4a

0 026 246

FIG. 3

HYDROSTATIC PRESSURES DEVELOPED

OXYPHOSPHATE CEMENT, NORMAL MIX

# FIG. 4

POST RETENTION

ZINC PHOSPHATE CEMENT

CLOSE FIT    LOOSE FIT

MEAN RET-ENTION IN KGS

35·8
30·5
25·1
20·6
10·6
30·4
17·5
15·5
12·1

NORMAL MIX THIN MIX NORMAL MIX NORMAL MIX THIN MIX NORMAL MIX

☐ 1·8 mm DIA. ROUND POST

▨ 1·8 mm DIA. FLUTED POST 20° FOUR FLUTES

⊟ 1·8 mm DIA. ROUND POST, COATED

} CEMENT INSERTED

0 026 246

# FIG. 5

## COMPARISON OF DIFFERENT CEMENTS

## CLOSE FITTING POST SYSTEM

## CEMENTS INSERTED

MEAN
RET-
ENTION
IN
KGS

ZINC OXYPHOSPHATE NORMAL MIX — 30.5 / 35.8

BLACK COPPER PHOSPHATE — 16.0 / 22.4

POLYCARBOXYLATE — 25.5 / 29.0

E B A (STAILINE) — 19.0 / 26.3

☐ ROUND POST 1.8 mm DIA.

▨ FLUTED POST 1.8 mm DIA. 4 FLUTES AT 20°

4